# EUROPEAN PATENT SPECIFICATION

(11) **EP 0 867 021 B1**
(45) Date of publication and mention of the grant of the patent: **07.11.2001**
(21) Application number: 97907489.5
(22) Date of filing: 08.01.1997
(51) Int. Cl.: G09F 23/06, B62B 3/14

(54) **AN ADVERTISING SUPPORT MEANS FOR A SHOP TROLLEY**
WERBETRÄGER FÜR EINKAUFSWAGEN IN HANDELSGESCHÄFTEN
MOYEN DE SUPPORT PUBLICITAIRE POUR CHARIOT D'ACHATS EN MAGASIN

(30) Priority: 17.09.1996 NO 963880
(43) Date of publication of application: 30.09.1998
(73) Proprietor: Risholm, Torill, 5030 Landas (NO); Risholm, Ragnar, 5030 Landas (NO)
(72) Inventor: Risholm, Torill, 5030 Landas (NO); Risholm, Ragnar, 5030 Landas (NO)
(74) Representative: Wiklund, Ingrid Helena
(86) International application number: NO9700004
(87) International publication number: WO9812693

(56) References cited:
- EP-A- 0 133 235
- WO-A-90/08685
- US-A- 2 864 189
- US-A- 3 251 543
- US-A- 3 881 267
- US-A- 4 156 318
- US-A- 4 685 701
- US-A- 4 901 901
- US-A- 4 988 025
- US-A- 5 086 960

## Description

The present invention relates to a rack for use in shopping carts (shop trolleys), especially for use in grocery shops, comprising a support plate, which is fastened to the upper edge portion of the shopping cart via one or more fastening means.

Hitherto it has been customary, in connection with shopping carts, to employ an advertising rack, which is fastened to the upper edge portion of the shopping cart, for example to the horizontal handle of the shopping cart. The advertising rack has hitherto been limited to the display or more or less permanent advertising text on an associated field of publicity.

Various types of data equipment have also been employed in the shopping cart for example as is illustrated in EP - 0 133 235, including a screen for the display of offers on goods, advertising, and the like.

It is customary to employ shopping carts on selecting goods from grocery stores or from other shops, such as in shopping centres, etc. and advertising for the choice of goods of the shop has constituted an important sales factor in connection with the advertising material in or on the shopping cart. There has been separately employed in the grocery business advertising material or offer material in the form of newspaper or printed sheet, which for example has been placed to lie loosely in the bottom of the shopping basket of the cart. The advertising effect is by chance with such freely arranged material and after loading of goods into the basket of the shopping cart the material can be available with difficulty to the user of the shopping cart.

From US 3 881 267 it is known to employ a support plate, which carries a note block/ list of merchandise and which is fastenable to the handle of the shopping cart. The note block/ list of merchandise constitutes a separate unit which is installed in a clamp member on the support plate.

Similar devices are known from US-A-2 864 189 and US-A-4 156 318.

From US 4 988 025 it is known to employ a support plate, which carries a calculator and a pair of pockets for the reception of advertising sheets or lists of merchandise and which is fastenable to the handle of the shopping cart. The illustrated pockets constitute stationary pockets for the display of an individual advertising sheet and for the display of a list with the choice of merchandise.

US-A-4 685 701 discloses a customer convenience attachment for supermarket shopping carts. The attachment is attached by a customer to the cart and during periods of non-use it can be folded and placed in a purse. The attachment comprises two folding leaves with a hand calculator and a note pad, respectively. Further, at the top edge of the leaves, spring clips for securing discount coupons are provided. A centre backbone member of the attachment rests on the shopping cart handle at a viewing angle.

With the present invention the particular aim is a solution where the goods on offer and other advertising can be displayed in a more comprehensive and more readily surveyable manner, that is to say with a greater offers facing the user of the shopping cart. Further the aim is that the service of the shop can update the offers on goods for example via daily offers in an easy manner according to need for a relatively large selection of goods in a limited display area.

The rack according to the invention is characterised by the features disclosed in the characterising part of claim 1.

In order to be able to arrange the sheets of goods on offer, the advertising material and survey maps, and the like in a particularly, conspicuous location on the shopping cart the desired goods directions and goods messages can be supplied to the user of the shopping cart in a readily changeable manner from the service side as required. The user has correspondingly the opportunity to get during the shopping round a good general view of current goods on offer in a more readily available, that is to say more easily surveyable manner via the file of repageable plastic pockets, for example by stating a series of different information relating to goods facts, goods prices, possible localising in the premises of the shop, etc. of a large selection of goods.

It is preferred according to the invention to employ a plastic pocket file with annular cover clips or loops, which is based on a series of different sheets of offers on goods and other types of information sheets in their respective plastic pockets being able to be installed and withdrawn via an insert slot in the respective plastic pocket. In particular the aim is a plastic pocket with an insert slot which can be readily closed off, which can ensure that the sheets can be stored in a protected manner, for example against the influence from moisture, for example rainwater by the use over time of the shopping cart outdoors.

Further features of the present invention will be evident from the following description having regard to the accompanying drawings, in which:

Fig. 1 shows in perspective a shopping cart with associated rack.

Fig. 2 shows in perspective a first construction of a rack according to the invention, in readiness for use.

Figs. 3 - 5 show the fastening plate of the rack illustrated in plan view, side view and end view respectively.

Figs. 6 - 8 show a second embodiment of a rack according to the invention, illustrated in perspective from the under side, in perspective from the upper side and in plan view respectively.

Fig. 9 shows a detail of the rack in figs 6-8.

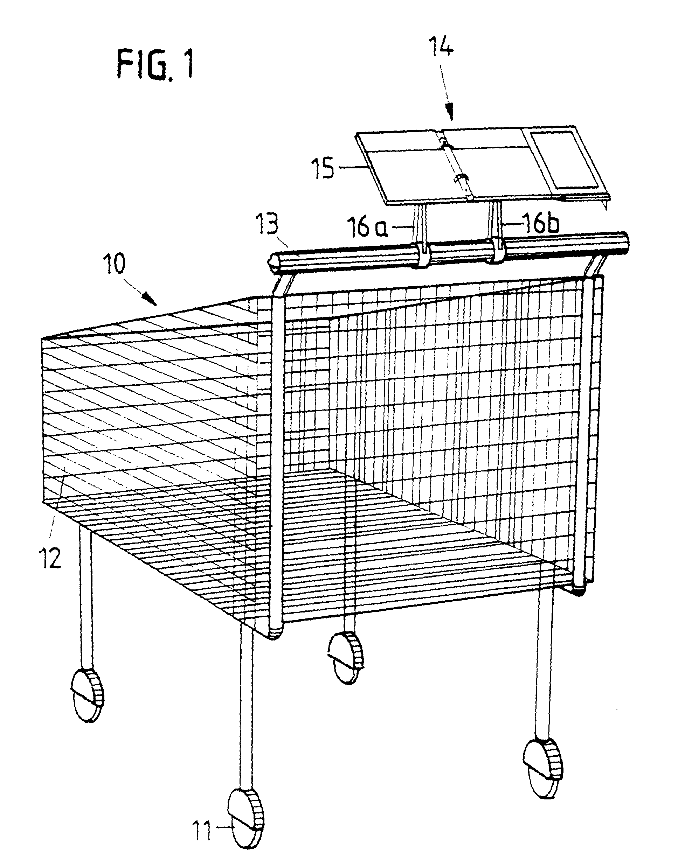

In Fig. 1 there is shown a shopping cart 10 with associated four wheels 11, including a basket 12 for goods and a push handle 13.

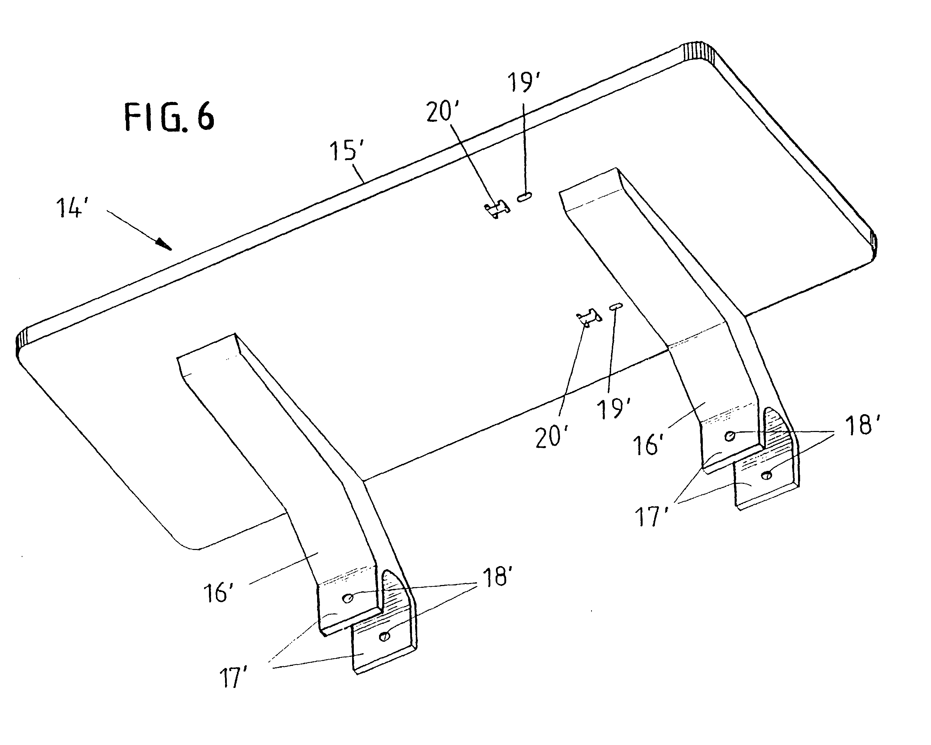

On the push handle 13 is fastened a rack 14 according to a first embodiment , comprising a support plate 15 with two fastening legs 16a,16b, each with an associated machine screw 17 and fastening nut 18 (see fig. 5), for fastening the rack 14 to the push handle 13.

The fastening legs 16a,16b are fastened to the support plate 15 via a pivot pin 19 in a respective mounting 20 on the under side of the support plate 15, so that the support plate can be adjusted about a horizontal axis in various positions swung about relative to the fastening legs 16a,16b, as is indicated by the arrow A in Fig. 5. Correspondingly the fastening legs 16a,16b can be fixed in such a manner that the fastening legs with support plate 15 can be swung about jointly to various swung about positions, as is indicated by the arrow B in Fig. 5. In the last mentioned case there can be established if necessary a permanent connection between fastening legs 16a,16b and support plate 15 instead of the illustrated pivot pin connection.

For example there can be employed a friction engagement or clamping mechanism between a respective fastening leg 16a,16b and an associated mounting 20, so that during use one can ensure the support plate 15 in place in the desired position, but with the possibility for swinging about to an inactive position, for example on closely packing together a number of shopping carts in a row after use.

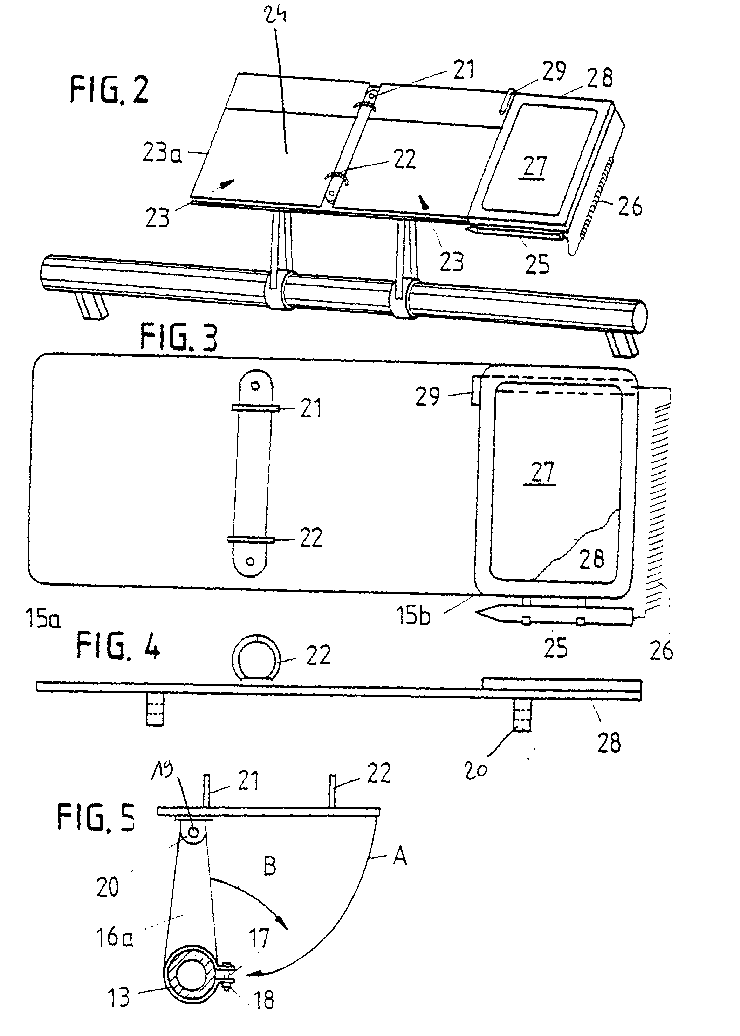

The support plate 15 is shown in the illustrated embodiment to the left in Fig. 3 with a main panel 15a, which forms an advertising panel or panel of offers on goods, and to the right in Fig. 3 there is shown a note panel 15b.

In the main panel 15a a pair of clips or loops 21,22 are shown for fastening in a number of plastic pockets 23. In the plastic pockets a sideways opening slot (23a) is provided for the insertion of a sheet of offers on goods or advertising sheet or an arbitrary information sheet, for example a survey map of the floor space of the shop and directions of the general placement of the goods.

In addition the plastic pockets 23 can for example be printed with permanent advertising text in areas restricted for that purpose, where this is of current interest. Alternatively the advertising text can be restricted to sheets 24 of offers on goods, which are admitted separately in arbitrary plastic pockets 23. It is also possible to cover the support plate 15 per se or other equipment with permanent advertising text, where this is of current interest.

There is employed a note panel 15b known per se. The note panel comprises, in the illustrated embodiment a fastening bow, which carries a slate pencil 25 in permanent connection with the note panel 15b, and a writing base 26 in the form of a plate with two layers, comprising an upper relatively flexible writing layer for example of matt plastic foil 27 and a lower stiffer and thicker layer of for example rigid plastic plate 28 with a coloured top surface. In a manner known per se provision is made for the plastic foil 27 by pressing it in against the plastic plate 28 to be held locally in contact with the plastic plate 28 where this becomes pressure actuated by the slate pencil 25 during writing. Correspondingly there is shown a handle 29 which can be displaced in an intermediate space between the plastic foil and the plastic plate for releasing the contact locally between these after final use of the note panel.

In Fig. 6 - 8 another embodiment of a rack 14' is illustrated according to the invention, shown in the form of an especially simple construction. The rack per se is made in one piece of plastic and comprises a rigid support plate 15', which is provided on the under side with a pair of rigid support arms 16' with associated fastening bows 17' for threading on the handle of the shopping cart. Bores 18' are shown which pass through the fastening bows 17' and which are adapted to receive a suitable fastening means, such as machine screws (not shown further) with associated self-locking nuts (not shown either). The machine screw, which is adapted to pass through the bores in the fastening bows, can for example pass through aligned bores through the handle of the shopping cart. Alternatively the fastening bows can be clamped in place about the handle of the shopping cart in that the machine screws are only fixed in the fastening bows 17' and the fastening bows 17' are clamped fast in a friction engagement with the handle of the shopping cart.

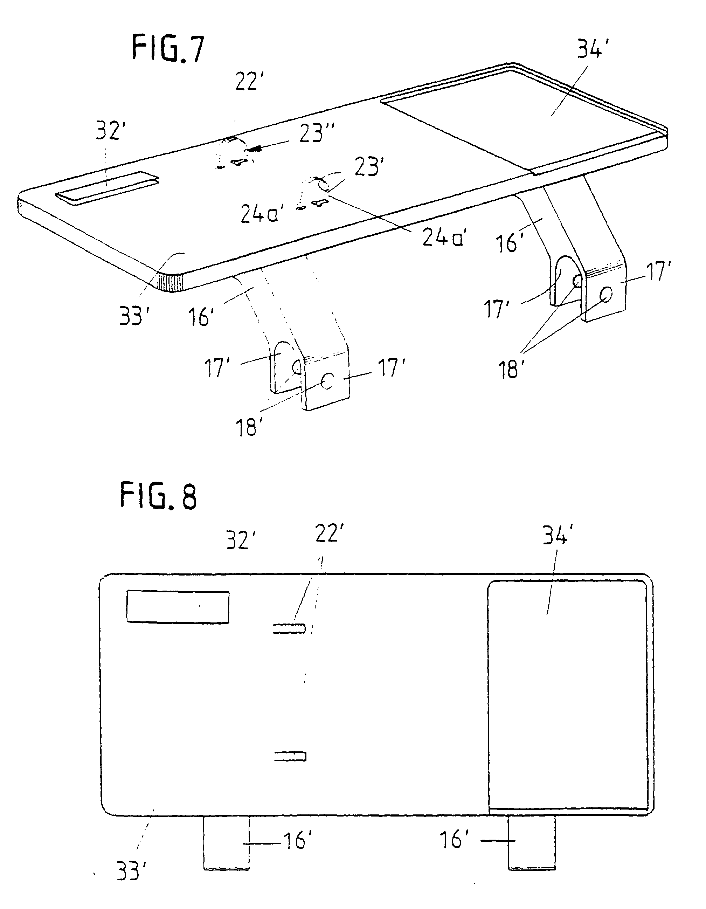

A pair of first cavities 19' and a pair of second cavities 20' are shown fashioned across through the support plate 15', designed for the reception of a pair of readily mountable and readily dismountable, separate loops 22' (see Fig. 7 and 8). A pair of loops 22' are shown which are made of band-shaped plastic. The loops 22' are shown with local incisions 23', or edge carities, in opposite edge portions of the band material at opposite ends of the loop 22' to form locally defined neck portions 23'' and associated fastening heads 24a',24b', of which only the one fastening head 24a' is shown in Fig. 7.

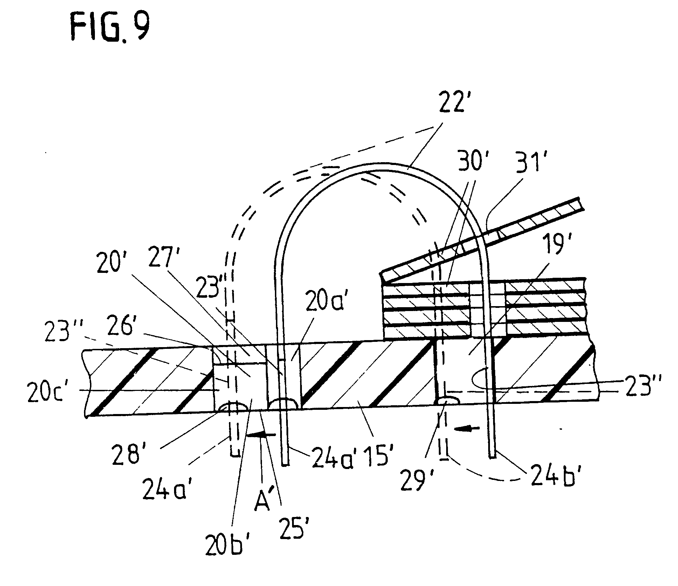

In Fig. 7 and 8 the other fastening heads 24b' of the loops 22' are shown fastened into associated cavities in a respective one of the first cavities 19'. Opposite ends of the loops, which are shown with the fastening head 24b' projecting freely outwards, in readiness for the fastening in of a pile of separate sheets 30' via associated fastening holes 31' in same (see Fig. 9).

The loops 22' are fastened into the cavities 19', as is indicated schematically in Fig. 9, in that the fastening head 24b' is first led endwise through the cavity 19' with the fastening head 24b' placed longitudinally of the cavity 19'. Thereafter the loop 22' is turned, with the neck portion 23'' received in the cavity 19', 90° to the position which is illustrated by fully drawn lines in Fig. 9. The opposite head portion 24a' of the loop 22' is pushed thereafter through the cavity 20' via a transverse section 20a' to the position which is represented by completely fully drawn lines in Fig. 9. Thereafter the loop 22' is pushed as indicated by the arrow A' (to the left in Fig. 9) to the position which is illustrated by broken lines in Fig. 9. Neck portion 23'' of the loop 22' forms a sliding abutment on the one side against a lower side surface 25' and an upper side surface 26' respectively in a depression 27' of a middle or intermediate third section 20b' of the cavity 20'. In the end position as represented by broken lines the head portion 24a' is locked in place in a stop groove 28' in a second section 20c' in the cavity 20', while the head portion 24b' is correspondingly locked in place in a stop groove 29' in the cavity 19'.

In Fig. 9 a pile of sheets 30' is indicated with associated fastening holes 31'. The sheets can constitute advertising sheets, sheets of offers on goods, map of the placing of goods in a shop locale, information sheets, etc. fastened in place on the support plate 15', in a corresponding manner as in an annular cover. In a preferred construction the sheets can consist of covered paper sheets which are surrounded by a plastic pocket welded together along the edges or paper or cardboard sheets plastic-coated in another manner.

On the upper side of the support plate there is fastened a clip 32' on one, left (as shown in Fig. 7 and 8) plate section 33', while there is formed a recessed plate section 34' to the right of the support plate. In the clip 32' there can be fastened in a note block, loose sheets of offers or the like, while there can be formed in the plate section 34' a writing base and/or fastened in a permanent advertising carrier in a manner not shown further.

## Claims

1. Rack (14,14') for use in shopping carts (10), especially for use in grocery shops, comprising a support plate (15,15'), which is fastened to the upper edge portion of the shopping cart via one or more fastening means (16a,16b;16') and which carries equipment for the display of offers on goods, advertising messages, and the like, **characterised in that** the support plate (15,15') carries a set of loops (21,22;22') for presentation of a pile of sheets (24,30') of offers on goods or similar information material, for example current daily sheets of offers, wherein said sheets (24,30') are fastened in place on the support plate (15,15') by means of said loops (21,22;22'), in a corresponding manner as in an annular cover, and are readily exchangeable and repageable.

2. Rack in accordance with claim 1, **characterised in that** each sheet (24,30') or like information material, is surrounded separately by a plastic sleeve, in the form of a plastic pocket (23), plastic coating or the like.

3. Rack in accordance with claim 2, **characterised in that** the loops (22') are made of band-shaped material with a head portion (24a', 24b') defined via a neck portion (23") in at least the one end of the loop (22').

4. Rack in accordance with claim 3, **characterised in that** one end of the loops (22') has a first head portion (24a') with an adjacent neck portion (23") freely displaceable across the support plate (15') via a first section (20a') in a cavity (20') formed in the support plate and is closeable via a stop groove (28') in a second section (20c') in the cavity (20'),
the neck portion (23'') of the loop (22') being displaceable with a tight fit via an intermediate third section (20b') in the cavity (20').

5. Rack in accordance with claim 3 or 4, **characterised in that** the other end of the loop (22') has a second head portion (24b') which is adapted to be pushed inwardly into and outwardly from an associated cavity (19') in the support plate by displacement parallel to the longitudinal direction of the cavity and to be anchored in the cavity (19') in a position across the longitudinal direction of the cavity (19'), with the loop (22') closed off in the cavity (19') via opposite edge cavities (23') in edges of the loop.

## Patentansprüche

1. Halter (14, 14') zur Verwendung bei Einkaufswagen (10), insbesondere zur Verwendung in Lebensmittelläden umfassend eine Halteplatte (15, 15'), die an den oberen Kantenbereich des Einkaufswagens über eine oder mehrere Befestigungseinrichtung(en) (16a, 16b; 16') befestigt ist und die eine Ausrüstung zur Anzeige von Warenangeboten, Werbemitteilungen oder dergleichen trägt,
**dadurch gekennzeichnet,**
**dass** die Halteplatte (15, 15') einen Satz von Schlaufen (21, 22; 22') zur Präsentation eines Stapels von Blättern (24, 30') von Warenangeboten oder ähnlichem Informationsmaterial, zum Beispiel tagesaktuelle Blätter von Angeboten, trägt, wobei die Blätter (24, 30') in entsprechender Weise wie in einem Ringbuch mittels der Schlaufen (21, 22; 22') an den Ort auf der Halteplatte befestigt sind und leicht austauschbar und umblätterbar sind.

2. Halter nach Anspruch 1,
**dadurch gekennzeichnet,**
**dass** jedes Blatt (24, 30') oder ähnliches Informationsmaterial einzeln durch eine Plastikhülle in Form einer Plastiktasche (23), eines Plastiküberzuges oder dergleichen umgeben ist.

3. Halter nach Anspruch 2,
**dadurch gekennzeichnet,**
**dass** die Schlaufen (22') aus bandförmigem Material gefertigt sind mit einem Kopfbereich (24a', 24b'), der über einen Halsbereich (23") an wenigstens dem einen Ende der Schlaufe (22') definiert ist.

4. Halter nach Anspruch 3,
**dadurch gekennzeichnet,**
**dass** ein Ende der Schlaufen (22') einen ersten Kopfbereich (24a') hat mit einem benachbarten Halsbereich (23"), der über einen ersten Abschnitt (20a') in einem in der Halteplatte geformten Hohlraum (20') quer durch die Halteplatte (15') hindurch frei verlagerbar ist und über eine Anschlagnut (28') in einem zweiten Abschnitt (20c') in dem Hohlraum (20') verschließbar ist,
wobei der Halsbereich (23") der Schlaufe (22') mit eng passendem Sitz über einen dazwischenliegenden dritten Abschnitt (20b') in dem Hohlraum (20') verschiebbar ist.

5. Halter nach Anspruch 3 oder 4,
**dadurch gekennzeichnet,**
**dass** das andere Ende der Schlaufe (22') einen zweiten Kopfbereich (24b') hat, der dazu geeignet ist, nach innen in einen und nach außen aus einem zugeordneten Hohlraum (19') in der Halteplatte durch Verlagerung parallel zu der Längsrichtung des Hohlraumes gedrückt zu werden und in dem Hohlraum (19') quer zu der Längsrichtung des Hohlraumes (19'), mit in dem Hohlraum (19') über entgegengesetzte Kantenhohlräume (23') in den Kanten der Schlaufe verriegelter Schlaufe (22') verankert zu werden.

## Revendications

1. Tablette (14, 14') destinée à être utilisée dans les chariots à emplettes (10), notamment dans les magasins d'épicerie, comprenant une plaque de support (15, 15') qui est fixée à une partie de bord supérieur du chariot à emplettes par un ou plusieurs dispositifs de fixation (16a, 16b ; 16') et qui porte un équipement d'affichage d'offres de marchandises, de messages publicitaires et analogues, **caractérisée en ce que** la plaque de support (15, 15') porte un ensemble de boucles (21, 22 ; 22') destiné à la présentation d'un empilement de feuilles (24, 30') d'offres de marchandises ou de matériaux informatifs semblables, par exemple des feuilles quotidiennes actuelles d'offres, les feuilles (24, 30') étant fixées en position sur la plaque de support (15, 15') par les boucles (21, 22 ; 22'), d'une manière correspondant à un couvercle annulaire, et pouvant être facilement échangées et tournées.

2. Tablette selon la revendication 1, **caractérisée en ce que** chaque feuille (24, 30') ou matériau informatif analogue est entouré séparément d'une feuille de matière plastique sous forme d'une pochette (23) de matière plastique, d'un revêtement de matière plastique ou analogue.

3. Tablette selon la revendication 2, **caractérisée en ce que** les boucles (22') sont formées d'un matériau en forme de bandes ayant une partie de tête (24a', 24b') délimitée avec une partie de col (23") à la première extrémité au moins de la boucle (22').

4. Tablette selon la revendication 3, **caractérisée en ce qu'**une première extrémité des boucles (22') a une première partie de tête (24a') avec une partie adjacente de col (23") qui peut être déplacée librement sur la plaque de support (15') grâce un premier tronçon (20a') dans une cavité (20') formée dans la plaque de support et qui peut être fermée à l'aide d'une gorge d'arrêt (28') disposée dans un second tronçon (20c') dans la cavité (20'),
la partie de col (23") de la boucle (22') étant mobile de façon ajustée à l'aide d'un troisième tronçon intermédiaire (20b') dans la cavité (20').

5. Tablette selon la revendication 3 ou 4, **caractérisée en ce que** l'autre extrémité de la boucle (22') a une seconde partie de tête (24b') destinée à être poussée vers l'intérieur dans une cavité associée (19') et vers l'extérieur de cette cavité dans la plaque de support par déplacement parallèle à la direction longitudinale de la cavité, et a être ancrée dans la cavité (19') en position recouvrant la direction longitudinale de la cavité (19'), la boucle (22') étant fermée dans la cavité (19') à l'aide de cavités latérales opposées (23') formées aux bords de la boucle.
